# EUROPEAN PATENT SPECIFICATION

(11) **EP 2 289 351 B1**
(45) Date of publication and mention of the grant of the patent: **09.10.2013**
(21) Application number: 10174352.4
(22) Date of filing: 27.08.2010
(51) Int. Cl.: A23L 1/226

(54) **Use of thiazoline compounds in flavor applications**
Verwendung von Thiazolinverbindungen in Geschmacksanwendungen
Utilisation de composés de thiazoline dans des applications de saveur

(30) Priority: 01.09.2009 US 551909; 26.08.2010 US 869055
(43) Date of publication of application: 02.03.2011
(73) Proprietor: INTERNATIONAL FLAVORS & FRAGRANCES INC., New York New York 10019 (US)
(72) Inventor: Agyemang, David O., East Brunswick, NJ 08816 (US); Bardsley, Kathryn A., Howell, NJ 07731 (US); Kraut, Kenneth J., Union Beach, NJ 07735 (US); Psota-Kelty, Linda, Tinton Falls, NJ 07724 (US); Trinnaman, Laurence, Montvale, NJ 07645 (US)
(74) Representative: Lawrence, John

(56) References cited:
- EP-A1- 0 105 988
- US-A- 3 660 112
- US-A- 4 243 688

## Description

### FIELD OF THE INVENTION

The present invention relates to thiazoline compounds and the incorporation and use of the new chemical entities as flavor and fragrance chemicals.

### BACKGROUND OF INVENTION

There is an ongoing need in the flavor and fragrance industry to provide new chemicals to give flavorists and perfumers the ability to create new flavor accords and fragrances products.

In searching for new naturally-occurring flavor compounds, toasted sesame seed oil was analyzed and new, flavorful thiazoline compounds were found. These compounds can be used by flavorists in a wide variety of flavors.

US Patent 4,243,688 discloses the addition of 2-(n-butyl)-4,5-dimethyl thiazoline as a flavouring to a salad dressing.

European Patent Application 0 105 988 discloses the addition of 2,4,5-trimethyl-2-(mercaptomethyl)-3-thiazoline as a flavouring to beef gravy.

US Patent 3,660,112 discloses the addition of 2-(3-5C alkyl) thiazole compounds as flavourings to tomato products.

### SUMMARY OF THE INVENTION

One embodiment of the invention is directed to a method for improving, enhancing or modifying a foodstuff through the addition of an effective amount of Formula I 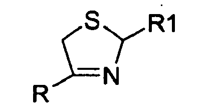 wherein R and R1 may each be selected from hydrogen or a C₁ to C₅ alkyl group.

A preferred embodiment of the invention is directed to a method for improving, enhancing or modifying a foodstuff through the addition of an effective amount of Structure I 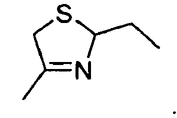 Another preferred embodiment of the invention is directed to a method for improving, enhancing or modifying a foodstuff through the addition of an effective amount of Structure II

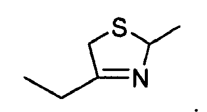

Another preferred embodiment of the invention is directed to a method for improving, enhancing or modifying a foodstuff through the addition of an effective amount of Structure III

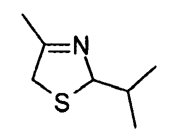

### DETAILED DESCRIPTION OF THE INVENTION

One embodiment of the invention is directed to a method for improving, enhancing or modifying a foodstuff through the addition of an effective amount of Formula I 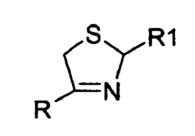 wherein R and R1 may be selected from hydrogen or a C₁ to C₅ alkyl group.

The alkyl group may be branched or straight chain.

The method may be for improving, enhancing or modifying the flavor of a foodstuff through the addition of an effective amount of Formula I.

The term "foodstuff" as used herein includes both solid and liquid ingestible materials for man or animals, which materials usually do, but need not, have nutritional value. Thus, foodstuffs include meats, gravies, soups, convenience foods, malt, alcoholic and other beverages including soft drinks and soda, soy-containing products, milk and dairy products including yogurt and ice cream, herbs including basil, dill weed, parsley, oregano, marjoram, sage, thyme, rosemary, mint, cilantro, tarragon, chervil, seafood, including fish, crustaceans, mollusks and the like, candies, vegetables, cereals, snacks, dog and cat foods, other veterinary products and the like.

Formula I may also be used in savory food applications. Examples of preferred foodstuff include soups, gravies, meat dishes, snacks, marinades, and sauces.

In a preferred embodiment of the invention, Structure I and Structure II may be used to improve, enhance or modify a foodstuff.

According to the present invention, Structure I is known by one skilled in the art as 2-ethyl -4-methyl-3-thiazoline and Structure II is known as 4-ethyl-2-methyl-3-thiazoline.

Structure I is described as possessing tropical fruit, catty, peach and berry flavor notes.

Another preferred embodiment of the invention is directed to a method for improving, enhancing or modifying a foodstuff through the addition of an effective amount of Structure III 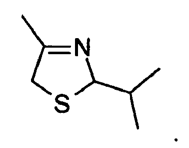 Structure III is known by one skilled in the art as 2-isopropyl-4-methyl-2,5-dihydrothiazole (or 2-isopropyl-4-methyl-3-thiazoline).

Structure III was found in toasted sesame seed oil. It can be used in brown flavors (cola, whiskey and chocolate), tropical fruit, berry and citrus flavors (peach, guava, mango, grapefruit, lemon, lime, blueberry, blackberry), savory flavors (nuts, braised meats, pretzel, fried garlic, sautéed onion).

In a preferred embodiment of the invention, Structure III may be used to improve, enhance or modify a foodstuff.

When the compounds of this invention are used in a flavoring composition, they can be combined with conventional flavoring materials or adjuvant. Such co-ingredients or flavor adjuvant are well known in the art for such use and have been extensively described in the literature. Requirements of such adjuvant materials are that they are organoleptically compatible with the Structures I, II or III and that they are ingestible acceptable and thus non-toxic or otherwise non-deleterious. Apart from these requirements, conventional materials can be used and broadly include other flavor materials, vehicles, stabilizers, thickeners, surface active agents, conditioners and flavor intensifiers.

Such conventional flavoring materials include saturated fatty acids, unsaturated fatty acids and amino acids; alcohols including primary and secondary alcohols, esters, carbonyl compounds including aldehydes and ketones; lactones; other cyclic organic materials including aryl compounds, alicyclic compounds, heterocyclics such as furans, pyridines, pyrazines and the like; sulfur-containing compounds including thiols, sulfides, disulfides and the like; proteins; lipids, carbohydrates; so-called flavor potentiators such as monosodium glutamate; magnesium glutamate, calcium glutamate, guanylates and inosinates; natural flavoring materials such as cocoa, vanilla and caramel; essential oils and extracts such as anise oil, clove oil and the like and artificial flavoring materials such as vanillin, ethyl vanillin and the like.

Specific preferred flavor adjuvants include but are not limited to the following: anise oil; ethyl 2-methylbutyrate; vanillin; cis-3-heptenol; cis-3-hexenol; trans-2-heptenal; butyl valerate; 2,3-diethylpyrazine; methyl cyclopentenolone; benzaldehyde; valerian oil; 3,4-dimethoxyphenol; amyl acetate; amyl cinnamate; gamma-butyrolactone; furfural; trimethylpyrazine; phenylacetic acid; isovaleraldehyde; ethyl maltol; ethyl vanillin; ethyl valerate; ethyl butyrate; cocoa extract; coffee extract; peppermint oil; spearmint oil; clove oil; anethole; cardamom oil; wintergreen oil; cinnamic aldehyde; ethyl 2-methylvalerate; gamma-hexenyl lactone; 2,4-heptadienal; methyl thiazole alcohol (4-methyl-5-.beta.-hydroxyethyl thiazole); 2-methylbutanethiol; 4-mercaptobutan-2-one; 3-mercaptopentan-2-one; 1-mercapto-2-propene; benzaldehyde; furfural; furfuryl alcohol; 2-mercaptopropionic acid; alkyl pyrazine; methylpyrazine; 2-ethyl-3-methylpyrazine; tetramethylpyrazine; polysulfides; dipropyl disulfide; benzyl methyl disulfide; alkyl thiophene; 2,3-dimethylthiophene; 5-methylfurfural; 2-acetylfuran; 2,4-decadienal; guiacol; phenylacetaldehyde; beta-decalactone; d-limonene; acetoin; amyl acetate; maltol; ethyl butyrate; levulinic acid; piperonal; ethyl acetate; octanal; valeraldehyde; hexanal; diacetyl; monosodium gulatamate; monopotassium glutamate; sulfur-containing amino acids, e.g., cysteine; hydrolyzed vegetable protein; 2-methylfuran-3-thiol; 2-methyldihydrofuran-3-thiol; 2,5-dimethylfuran-3-thiol; hydrolyzed fish protein; tetramethylpyrazine; propyl propenyl disulfide; propyl propenyl trisulfide; diallyl disulfide; diallyl trisulfide; dipropenyl disulfide; dipropenyl trisulfide; 4-methyl-2-[(methylthio)-ethyl]-1,3-dithiolane; 4,5-dimethyl-2-(methylthiomethyl)-1,3-dithiolane; and 4-methyl-2-(methylthiomethyl)-1,3-dithiolane. These and other flavor ingredients are provided in U.S. Patent Nos. 6,110,520 and 6,333,180 .

The compounds according to the invention, including Structures I, II and III, or compositions incorporating them, as mentioned above, can be combined with one or more vehicles or carriers for adding them to the particular product. Vehicles can be edible or otherwise suitable materials such as ethyl alcohol, propylene glycol, water and the like, as described supra. Carriers include materials such as gum arabic, carrageenan, xanthan gum, guar gum and the like.

The compounds according to the invention, including Structures I, II and III, prepared according to the invention can be incorporated with the carriers by conventional means such as spray-drying, drum-drying and the like. Such carriers can also include materials for coacervating the thiazoline compounds of the invention to provide encapsulated products, as set forth supra. When the carrier is an emulsion, the flavoring composition can also contain emulsifiers such as mono- and diglycerides or fatty acids and the like. With these carriers or vehicles, the desired physical form of the compositions can be prepared.

The quantity of the compounds according to the invention, including Structures I, II and III, utilized should be sufficient to impart the desired flavor characteristic to the product. The quantity used will vary depending upon the ultimate foodstuff; the amount and type of flavor initially present in the foodstuff; the further processing or treatment steps to which the foodstuff will be subjected; the regional and other preference factors; the type of storage, if any, to which the product will be subjected; and the pre-consumption treatment such as baking, frying and so on, given to the product by the ultimate consumer.

The preferred dosage range of the compounds according to the invention in the product is from 0.001 ppm to 10 ppm, preferably 0.001 ppm to 5 ppm, more preferably 0.001 ppm to 1 ppm. Thus, a flavor composition may contain one or more compounds according to the invention.

Accordingly, the terminology "effective amount" and "sufficient amount" is understood in the context of the present invention to be a quantitatively adequate amount to alter the flavor of the foodstuff.

The following are provided as specific embodiments of the present invention. Other modifications of this invention will be readily apparent to those skilled in the art, without departing from the scope of this invention. As used herein, both specification and following examples all percentages are weight percent unless noted to the contrary. IFF as used in the examples is understood to mean International Flavors & Fragrances Inc.

### Example I

### Preparation of 1-Mercapto-2-propanone

Chloroacetone (250gm, 2.70mol) was added to a solution of a stirring Sodium Hydrosulfide Hydrate (303.0gm, 5.40mol), Water (300ml) and Ethanol (300ml) at 10°C for an hour. Once feed was complete, the reaction mixture was stirred for 15 minutes prior to workup. The reaction mixture was quenched with water (250ml) and extracted with diethyl ether (250ml). The organic layer was washed with water followed by brine.

The crude containing the solvent was used as is for the next step.

### Preparation of 2-Ethyl -4-Methyl-3-Thiazoline (Structure I)

Ammonium Hydroxide (30wt%, 630.9g, 5.40mol) was slowly added to a solution of propionaldehyde (188g, 3.24mol) in THF (500ml), while maintaining temperature at 20°C. Once complete, the reaction mixture was stirred for 15 minutes. Crude mercapto-2-propanone in ether was added dropwise to the reaction mixture. Once the feed was complete, the reaction mixture was stirred for 15 minutes prior to workup. The biphasic mixture separated and the aqueous extracted with diethyl ether. The organic layers were then combined and washed with brine. The crude solution was concentrated in vacuum and purified by fractional distillation under reduced pressure to yield a pale yellow oil (129g, 37 mol% yield).

### Example II

Threshold of Structure I in water is 1ppb and possesses tropical fruit, catty, peach and berry flavor notes.

### Structure I, 2-Ethyl -4-Methyl-3-Thiazoline, in Oatmeal

Commercially available plain instant oatmeal which ingredients are whole grain rolled oats, calcium carbonate, salt, guar gum, caramel color, reduced iron, niacinamide, vitamin A, palmitate, pyridoxine, hydrochloride, riboflavin, thiamin mononitrate and folic acid.

At a dosage of 5ppb the compound added a sulfurous, peach flavor.

At a dosage of 1ppb the compound added faint sulfurous notes and synergized with grain notes.

### Structure I, 2-Ethyl -4-Methyl-3-Thiazoline, in Orange Soda

Carbonated water, high fructose corn syrup, citric acid, potassium benzoate, gum acacia, natural flavor, ester gum, yellow 6, brominated vegetable oil, red 40.

At a dosage of 5 ppb, the compound made the orange soda taste more like tangerine soda. It made the soda drink more natural tasting and cut acidity.

### Structure I, 2-Ethyl -4-Methyl-3-Thiazoline, in Beef Broth

Beef broth and less than 1% of the following: salt, MSG, hydrolyzed corn protein, hydrolyzed soy protein, hydrolyzed wheat protein, dextrose, onion powder, autolyzed yeast extract, caramel color, partially hydrogenated soybean oil, natural flavor, thiamine hydrochloride, disodium inosinate, disodium guanylate.

At a dosage of 4ppb the compound boosted roasted notes. At a level above 4ppb the thiazoline compounds imparted tropical notes.

### Structure I, 2-Ethyl -4-Methyl-3-Thiazoline, in Mixed Berry Yogurt

Cultured pasteurized grade A nonfat milk, high fructose corn syrup, modified corn starch, nonfat milk, kosher gelatin, corn starch, tricalcium phosphate, natural flavor, potassium sorbate added to maintain freshness, sucralose (splenda brand,) acesulfame potassium, colored with annatto extract, vitamin A acetate, vitamin D3.

At a dosage of 5ppb the compound boosted fruity notes. At a level above 5ppb the thiazoline compounds imparted peach notes.

### Example III

### Preparation of 2-Isopropyl-4-methyl-3-thiazoline (Structure III)

To a solution of isobutyraldehyde (117.0gm. 1.62 mol) in THF (500ml) was slowly added ammonium hydroxide solution (30 wt%, 315.5gm, 2.70mol) at not more than 20°C temperature. Continue stirring for 15 minutes at the end of addition. Slowly add 1-mercapto-2-propanone (122.0g, 1.35mol) at not more than 20°C. Stir for 15 minutes at the end of addition. The reaction mixture was extracted with ether and the organic layer washed with water. It was again washed with brine. The solvent was removed in vacuo and the product purified by distillation to give the compound (11.0gm 4.2 mol% yield) as a pale yellow oil.

Threshold: 10ppb (slightly fruity, tropical, peach, berry) Maximum: 50ppm (rubber, phenolic, mushroom)

At lower levels a more peach-like character is perceived; at higher levels, the material is more chocolate-like.

Useful for: brown flavors (cola, whiskey and chocolate), tropical fruit, berry and citrus flavors (peach, guava, mango, grapefruit, lemon, lime, blueberry, blackberry), savory flavors (nuts, braised meats, pretzel, fried garlic, sautéed onion).

### Structure III in Instant Oatmeal (regular flavor):

50ppb: added a whole wheat note 75ppb: too high, tastes very peach-like and plastic. 100ppb: too high.

Ingredients: whole grain rolled oats, calcium carbonate, salt, guar gum, caramel color, reduced iron, niacin-amide, vitamin A palmitate, pyridoxine hydrochloride, riboflavin, thiamin mononitrate, folic acid

### Structure III in Vanilla Shake

100ppb: improved vanilla flavor, added chocolate notes, more like chocolate flavored pudding, and diminished vitamin off-notes. 150ppb: richened vanilla flavor.

Ingredients: water, sugar, corn maltodextrin, calcium and sodium caseinates, soy oil, soy protein concentrate, corn oil, canola oil, artificial flavoring, soy lecithin, carrageenan and gellan gum

### Structure III in Plain Non-fat Yogurt (255g) with Strawberry Preserves (45g):

200ppb: increased sourness, ripened strawberry. 320ppb: browned the strawberry, added a peach note. 400ppb: brightened the strawberry, added a peach note. Ingredients: cultured grade A non-fat milk, sugar, strawberries

Whiskey Flavor - Structure III at 0.2% in water:
150ppb: enhanced peaty notes and decreased waxy notes.
300ppb: a bit too high but also increased peaty notes.

### Structure III in Chocolate Milk: (35g of Hershey's (genuine chocolate flavor) Syrup in 337g low-fat milk)

150ppb: darker chocolate flavor and silkier perception
200ppb: increased dark notes, slightly fruity (blueberry-like)
300ppb: too high, pyrazine-like
400ppb: too high, tropical fruit (peach-like), pyrazine-like

Ingredients: milk, high fructose corn syrup, water, cocoa, sugar, potassium sorbate, salt, xanthan gum, polysorbate 60, vanillin, artificial flavor

### Structure III in Coffee (300g) + low fat milk (150g):

200ppb: darker roasted coffee
400ppb: burnt coffee

Ingredients: fresh brewed coffee, low fat milk

### Structure III in Orange Soda:

200ppb: enhanced total flavor including citrus impact and mouthfeel, added a lemon-lime flavor.

Ingredients: Carbonated water, high fructose corn syrup and/or sugar, citric acid, sodium benzoate (preservative), food starch-modified, natural flavors, caffeine, glycerol ester of wood rosin, ascorbic acid (preservative), yellow 6, red 40

### Structure III in Butterscotch Pudding:

200ppb: enhanced the butterscotch flavor
100ppb: increased the creaminess of the dessert, richened the butterscotch flavor.
Ingredients: Non Fat Milk, Water, Sugar, Modified Corn Starch, Vegetable Oil (contains one or more of the following: Palm Oil, Partially Hydrogenated Palm Oil, Sunflower Oil, Partially Hydrogenated Soybean Oil), Less than 2% of: Salt, Color Added (including Yellow 6 and Yellow 5), Calcium Carbonate, Sodium Stearoyl Lactylate, Artificial Flavor

### Structure III in Beef Gravy:

300ppb: increased brown roasted notes, increased perception of cooking time.

Ingredients: beef stock, water, modified corn starch, modified wheat flour, beef fat, salt, beef, butter, hydrolyzed soy protein, soy sauce, caramel color, yeast extract, corn maltodextrin, sugar, garlic powder, onion powder, natural flavoring, black pepper, milk

### Structure III in Peach drink:

Control tastes like a peach flavor in an apple juice.
1ppm: too sulfurous
500ppb: drastically changed profile, darker, brown.
100ppb: enhanced apple flavor, brown, caramel, cooked peach

Ingredients: water, sugar, flavoring

## Claims

1. A method for improving, enhancing or modifying a foodstuff through the addition of a compound of the following formula: 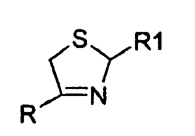 wherein R and R1 may be selected from hydrogen or a C₁ to C₅ alkyl group.

2. The method of claim 1 wherein R is methyl and R1 is ethyl.

3. The method of claim 1 wherein R is ethyl and R1 is methyl.

4. The method of any one of claims 1 to 3 wherein the compound is incorporated into a foodstuff selected from the group consisting of meats, sauces, gravies, soups, convenience foods, malt beverages, alcoholic beverages, soy-containing products, milk products, dairy products, herbs, fish, crustaceans, mollusks, candies, vegetables, cereals, soft drinks, snacks, dog food, cat foods and mixtures thereof.

5. The method of claim 4 wherein the foodstuff is a meat.

6. The method of claim 4 wherein the foodstuff is a soda.

7. The method of claim 4 wherein the foodstuff is a yogurt.

8. The method of any one of claims 1 to 7 wherein the compound is used at a level from 0.001 ppm to 10ppm by weight.

9. The method of claim 8 wherein the compound is at a level from 0.001 ppm to 5ppm by weight.

10. The method of claim 8 wherein the compound is at a level from 0.001 ppm to 1ppm by weight

11. The method of any one of claims 1 to 10 wherein the method is for improving, enhancing or modifying the flavor of a foodstuff.

## Patentansprüche

1. Ein Verfahren zur Verbesserung, Verstärkung oder Modifikation eines Nahrungsmittels durch den Zusatz einer Verbindung mit der folgenden Formel: 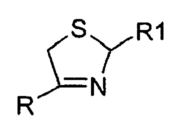 wobei R und R1 aus Wasserstoff oder einer C₁- bis C₅-Alkylgruppe ausgewählt werden können.

2. Das Verfahren entsprechend Anspruch 1, wobei R Methyl und R1 Ethyl ist.

3. Das Verfahren entsprechend Anspruch 1, wobei R Ethyl und R1 Methyl ist.

4. Das Verfahren entsprechend einem Ansprüche 1 bis 3, wobei die Verbindung in ein Nahrungsmittel inkorporiert wird, das aus der Gruppe bestehend aus Folgenden ausgewählt wird, nämlich Fleisch, Saucen, Bratensaucen, Suppen, Fertiggerichte, Malzgetränke, alkoholische Getränke, sojahaltige Produkte, Milchprodukte, Molkereiprodukte, Kräuter, Fisch, Schalentiere, Mollusken, Süßwaren, Gemüse, Zerealien, alkoholfreie Getränke, Snacks, Hundefutter, Katzenfutter sowie Mischungen dieser.

5. Das Verfahren entsprechend Anspruch 4, wobei das Nahrungsmittel Fleisch ist.

6. Das Verfahren entsprechend Anspruch 4, wobei das Nahrungsmittel ein Sodawasser ist.

7. Das Verfahren entsprechend Anspruch 4, wobei das Nahrungsmittel ein Joghurt ist.

8. Das Verfahren entsprechend einem der Ansprüche 1 bis 7, wobei die Verbindung in einer Menge von 0,001 bis 10 Gewichts-ppm verwendet wird.

9. Das Verfahren entsprechend Anspruch 8, wobei die Verbindung in einer Menge von 0,001 bis 5 Gewichts-ppm verwendet wird.

10. Das Verfahren entsprechend Anspruch 8, wobei die Verbindung in einer Menge von 0,001 bis 1 Gewichts-ppm verwendet wird.

11. Das Verfahren entsprechend einem der Ansprüche 1 bis 10, wobei das Verfahren zu Verbesserung, Verstärkung oder Modifikation des Geschmacks eines Nahrungsmittels dient.

## Revendications

1. Un procédé d'amélioration, de rehaussement ou de modification d'un aliment par l'ajout d'un composé de la formule suivante : 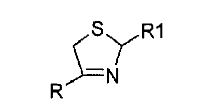 où R et R1 peuvent être sélectionnés parmi hydrogène ou un groupe alkyle C₁ à C₅.

2. Le procédé selon la Revendication 1 où R est méthyle et R1 est éthyle.

3. Le procédé selon la Revendication 1 où R est éthyle et R1 est méthyle.

4. Le procédé selon l'une quelconque des Revendications 1 à 3 où le composé est incorporé dans un aliment sélectionné dans le groupe se composant de viandes, sauces, jus, soupes, aliments prêts à servir, boissons à base de malt, boissons alcoolisées, produits contenant du soja, produits laitiers, herbes, poisson, crustacés, mollusques, friandises, légumes, céréales, boissons non alcoolisées, snacks, aliments pour chiens, aliments pour chats, et des mélanges de ceux-ci.

5. Le procédé selon la Revendication 4 où l'aliment est une viande.

6. Le procédé selon la Revendication 4 où l'aliment est un soda.

7. Le procédé selon la Revendication 4 où l'aliment est un yaourt.

8. Le procédé selon l'une quelconque des Revendications 1 à 7 où le composé est utilisé à un niveau de 0,001 ppm à 10 ppm en poids.

9. Le procédé selon la Revendication 8 où le composé est à un niveau de 0,001 ppm à 5 ppm en poids.

10. Le procédé selon la Revendication 8 où le composé est à un niveau de 0,001 ppm à 1 ppm en poids.

11. Le procédé selon l'une quelconque des Revendications 1 à 10 où le procédé est destiné à l'amélioration, le rehaussement ou la modification de l'arôme d'un aliment.
